# EUROPEAN PATENT SPECIFICATION

(11) **EP 4 216 330 B1**
(45) Date of publication and mention of the grant of the patent: **29.01.2025**
(21) Application number: 23151530.5
(22) Date of filing: 13.01.2023
(51) Int. Cl.: H01M 10/0525, H01M 10/44, H01M 10/04

(54) **FORMATION SYSTEM**
FORMATIONSSYSTEM
SYSTÈME DE FORMATION

(30) Priority: 19.01.2022 CN 202220145055 U
(43) Date of publication of application: 26.07.2023
(73) Proprietor: Contemporary Amperex Technology (Hong Kong) Limited, Central, Central And Western District (HK)
(72) Inventor: HE, Zehong, Ningde Fujian, 352100 (CN); XIE, Dongdong, Ningde Fujian, 352100 (CN); GUO, Fengyu, Ningde Fujian, 352100 (CN); HUANG, Caixia, Ningde Fujian, 352100 (CN); TANG, Minghao, Ningde Fujian, 352100 (CN)
(74) Representative: Herrero & Asociados, S.L.

(56) References cited:
- CN-C- 100 395 904
- CN-U- 205 882 076
- CN-U- 206 976 522
- CN-U- 209 515 885

## Description

### TECHNICAL FIELD

The embodiments of the present application relate to the technical field of battery production, and in particular to a formation system.

### BACKGROUND

Formation is a process in which a battery after liquid injection is activated such that a chemical reaction occurs inside the battery to form a solid electrolyte interphase (SEI) film to ensure the operation performance of the battery during subsequent charge/discharge cycles. During this process, the battery will generate a certain amount of gas, and the gas will affect the forming of the SEI film and thus affect the subsequent operation performance of the battery.

At present, in order to prevent the influence of the gas generated during the battery formation process on the forming of the SEI film, it is necessary to maintain a high negative pressure inside the battery during the battery formation process to discharge the generated gas in real time, but this will result in the loss of electrolyte caused by the electrolyte inside the battery being drawn out of a housing.

CN100395904C discloses a pressurized liquid injection device for a battery electrode plate, wherein the battery 1 comprises a housing with a liquid injection hole and electrode plates in the housing. The pressurized liquid injection device comprises a vacuum chamber 2, a clamp 3 for holding the battery 1, a container 4 for holding the electrolyte is provided on the clamp 3, and a pipe 5 for connecting the liquid injection hole of the battery 1 is provided at the lower part of the container 4.

CN206976522U discloses a battery vacuum negative pressure formation device, comprising a vacuum generating device 1, a first hose 2, a transition container 3, a second hose 4, a connected structure 5, a connected structure 6 and a connected structure 7. One end of the connected structure 5, the connected structure 6 and the connected structure 7 is sealed and connected with the second hose 4, and the other end is sealed and connected with the liquid injection hole of battery 8. The connected structure 7 includes a connected hose 71, a hose connector 72, a plug 73, and a suction cup 74 which are sealed and connected in sequence. The suction cup 74 is sealed with the liquid injection hole of the battery 8.

CN205882076U discloses a battery formation device, comprising a positioning block 1, a drive mechanism 2, a sealing assembly 3, a vacuum mechanism 4, a charge and discharge mechanism 5, and a barrier 6. The vacuum mechanism 4 is sealed and communicated with a channel of the sealing assembly 3, and the vacuum mechanism 4 can vacuum the inside of the battery through the channel of the sealing assembly 3 and the liquid injection hole of the battery.

CN209515885U discloses a battery negative pressure formation device, comprising a frame 1, a pallet 2, a lifting mechanism 3, a probe assembly 4 and a negative pressure assembly 5. Two probe assemblies 4 and one negative pressure assembly 5 are combined into a group for working with a battery 6. The negative pressure assembly 5 is connected to and communicate with the injection hole 61 on the battery cover plate to vacuum the battery 6.

### SUMMARY

The invention is set out in the appended set of claims.

A purpose of the embodiments of the present application is to provide a formation system, which can prevent the loss of electrolyte caused by the electrolyte inside the battery being drawn out of a housing.

In order to solve the technical problem mentioned above, the embodiments of the present application provide a formation system for formation of a battery, the formation system comprising a clamp, a suction nozzle, and a negative pressure source, the clamp being used to clamp the battery, the suction nozzle being disposed corresponding to and opposite to a liquid injection hole of the battery to collect formation exhaust gas from the battery, and the negative pressure source being connected to the suction nozzle to provide negative pressure environment for the suction nozzle, wherein there is a preset distance between the suction nozzle and the liquid injection hole of the battery to prevent electrolyte in the battery from being drawn out.

With regard to the formation system according to the embodiments of the present application, a pressure is applied to the battery by means of the clamp to suppress the expansion of a gap between electrode plates of the battery, suppress the generation of bubbles, and promote the discharge of a formation gas of the battery, so as to ensure that there is no abnormality in the inner interphase of the battery in a normal pressure state to achieve the effect of formation under a normal pressure. In addition, the formation exhaust gas from the battery can be discharged in real time in the negative pressure environment that is created in the suction nozzle by the negative pressure source, and since there is a preset distance between the suction nozzle and the liquid injection hole of the battery, the negative pressure environment does not directly enter the inside of the battery, which can prevent the electrolyte inside the battery from being drawn out so as to prevent the loss of the electrolyte inside the battery.

In some embodiments, the clamp comprises at least two limiting members disposed opposite each other at an interval, the battery is held between the two adjacent limiting members, and the two adjacent limiting members are movable relatively to change a clamping force on the battery. In this way, the clamping force on the battery can be adjusted by the relative movement of the limiting members, and the distance between the limiting members can also be changed by the relative movement of the limiting members, so as to adapt to the clamping of batteries of different sizes, thereby improving the compatibility of the clamp.

In some embodiments, the clamp further comprises a base, on which each of the limiting members is movably disposed. In this way, the base can have a function of bearing the battery, such that the battery can be conveniently placed between the two adjacent limiting members.

In some embodiments, the clamp further comprises a buffer member that is disposed on the side of the limiting member close to the battery and configured to abut against the battery. The buffer member can buffer the clamping force of the clamp on the battery to avoid damages to the battery caused by a sudden change of the clamping force.

In some embodiments, the buffer member has a first surface that abuts against a second surface of the battery, with the orthographic projection of the first surface on the second surface being not exceeding the second surface. The orthographic projection of the first surface of the buffer member on the second surface does not exceed the second surface of the battery, such that the buffer member can avoid an edge part of the battery, and thus the edge part of the battery is not easy to deform by being squeezed and then crushed.

In some embodiments, the first surface of the buffer member is of an arched structure with the middle protruding outwardly.

In some embodiments, the suction nozzle is internally provided with a funnel-shaped channel, with the end of the channel having a larger area being disposed facing the liquid injection hole of the battery, and the other end being connected to the negative pressure source. The suction nozzle is internally provided with the funnel-shaped channel, and the end of the channel having a larger area is disposed facing the liquid injection hole of the battery, such that the area of action of the negative pressure region of the suction nozzle on the liquid injection hole can be increased for better collection of the formation exhaust gas from the battery.

In some embodiments, the formation system further comprises an enclosure, with one end of the enclosure being sleeved on the suction nozzle, and the other end of the enclosure being disposed facing and close to the liquid injection hole of the battery. In this way, the enclosure sleeved on the suction nozzle can have a barrier function on the periphery of the suction nozzle and can prevent the formation exhaust gas from the battery from diffusing into surroundings.

In some embodiments, the formation system further comprises a collection pipeline configured for connecting the negative pressure source and the suction nozzle. In this way, the connection between the negative pressure source and the suction nozzle can be achieved by means of the collection pipeline, the length of the collection pipeline can be set according to the distance between the negative pressure source and the suction nozzle, and during production in a factory, the negative pressure source and the suction nozzle that are far away from each other can be connected by means of the collection pipeline.

In some embodiments, the collection pipeline comprises a delivery pipe, a confluence pipe connected to the delivery pipe, and a plurality of branch pipes connected to the confluence pipe, the negative pressure source being connected to the delivery pipe, and each of the branch pipes being connected to one suction nozzle. In this way, the simultaneous collection of the formation exhaust gas from multiple batteries can be achieved by means of the confluence pipe and the plurality of branch pipes, thereby improving the production efficiency.

In some embodiments, the formation system further comprises a gas-liquid separator, with an inlet end of the gas-liquid separator being connected to the delivery pipe, and an outlet end of the gas-liquid separator being connected to the negative pressure source. By means of providing the gas-liquid separator, the electrolyte in the formation exhaust gas of the battery can be removed by the gas-liquid separator to prevent environmental pollution caused by the electrolyte. In addition, the inlet end of the gas-liquid separator is connected to the delivery pipe, and the outlet end of the gas-liquid separator is connected to the negative pressure source, such that it is not necessary to provide gas-liquid separators in branches of the collection pipeline, and thus the number of gas-liquid separators can be reduced.

The embodiments of the present application provide a formation method for a battery, wherein the formation method includes: clamping the battery; arranging a suction nozzle at a preset distance from a liquid injection hole of the battery; and driving a negative pressure source to enable the suction nozzle to generate a negative pressure.

In some embodiments, the preset distance has a range greater than 0 mm and less than 10 mm.

### BRIEF DESCRIPTION OF DRAWINGS

Various other advantages and benefits will become apparent to those of ordinary skill in the art upon reading the following detailed description of preferred embodiments. The drawings are merely for the purpose of illustrating the preferred embodiments and are not to be construed as limiting the present application. Moreover, like components are denoted by like reference numerals throughout the drawings. In the drawings:
FIG. 1 is a schematic structural cross-sectional view of a formation system when in use according to an embodiment of the present application;
FIG. 2 is a schematic structural exploded view of a battery according to an embodiment of the present application;
FIG. 3 is a schematic structural perspective view of a formation system when in use according to an embodiment of the present application with a plurality of clamps; and
FIG. 4 is a schematic structural rear view of a formation system when in use according to an embodiment of the present application with a plurality of clamps.

List of reference signs:
10. clamp; 11. limiting member; 12. base; 13. buffer member; 131. first surface; 14. intermediate plate; 20. suction nozzle; 21. channel; 22. enclosure; 23. collection pipeline; 231. delivery pipe; 232. confluence pipe; 233. branch pipe; 24. gas-liquid separator; 30. negative pressure source; 40. battery; 41. housing; 42. electrode assembly; 43. end cap; 44. liquid injection hole; 45. second surface.

### DESCRIPTION OF EMBODIMENTS

Embodiments of the technical solutions of the present application will be described in more detail below with reference to the drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the technical features modified thereby. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: the three instances of A alone, A and B simultaneously, and B alone. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In the description of the embodiments of the present application, unless otherwise explicitly specified and defined, the technical terms "mounting", "mutual connection", "connection", "fixing", etc. should be understood in a broad sense, for example, they may be a fixed connection, a detachable connection, or an integrated connection; may be a mechanical connection or an electrical connection; and may be a direct connection or an indirect connection through an intermediate medium, and may be communication between interiors of two elements or interaction between the two elements. For those of ordinary skill in the art, the specific meaning of the above terms in the embodiments of the present application can be understood according to specific situations.

Formation aims to activate a battery. During the first charge/discharge process of the battery, an electrode material and electrolyte react at a solid-liquid two-phase interphase to form a passivation film layer that covers a surface of the electrode material. This passivation film layer is an interphase layer, and has the characteristics of solid electrolyte. This layer of passivation film is also referred to as a solid electrolyte interphase film, or an SEI film for short. The forming of the SEI film has a crucial influence on the subsequent operation performance of the battery.

At present, in order to facilitate the discharge of gas during the battery formation to prevent the influence of the gas generated during a battery formation process on the forming of the SEI film, during the battery formation process, a negative pressure source is connected to the inside of the battery via a pipeline, and a suction nozzle presses against a liquid injection hole of a battery so as to apply a negative pressure to the inside of the battery to discharge the gas. In this way, the battery is connected to the negative pressure source to enable the inside of the battery to be at a negative pressure, such that the formation exhaust gas from the battery can be drawn out of a housing of the battery in time.

However, the applicants have noted that, when the inside of the battery is at the negative pressure, although the formation exhaust gas from the battery will be drawn out of the housing, the electrolyte inside the battery will also be drawn out of the housing, resulting in the loss of electrolyte.

In order to prevent the loss of electrolyte caused by the electrolyte inside the battery being drawn out of the housing, the applicants have found that a pressure can be applied to the battery by means of a clamp to remove the formation exhaust gas generated inside the battery, and the negative pressure source is separated from the inside of the battery, that is, the negative pressure created by the negative pressure source does not directly enter the inside of the battery, but the negative pressure created by the negative pressure source is only close to the liquid injection hole of the battery. Specifically, the suction nozzle connected to the negative pressure source is spaced apart from the liquid injection hole of the battery by a preset distance.

When this formation system is used, the pressure can be applied to the battery by means of the clamp to promote the discharge of the formation gas from the battery, and the formation exhaust gas from the battery can be collected by means of the suction nozzle connected to the negative pressure source. Since there is a preset distance between the suction nozzle and the liquid injection hole of the battery, it is possible to prevent the electrolyte inside the battery from being drawn out of the housing, and thus prevent the loss of the electrolyte inside the battery.

In addition, since there is no need to allow the inside of the battery to be at a high negative pressure, a negative pressure cup, a pressure regulating valve and a flow valve in a high negative pressure formation system can be omitted, thereby simplifying the negative pressure system and reducing the cost of the negative pressure system.

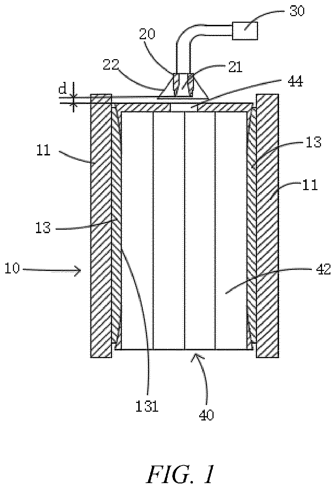

The formation system according to the embodiment of the present application is used for formation of a battery. As shown in FIG. 1, the formation system comprises a clamp 10, a suction nozzle 20 and a negative pressure source 30, the clamp 10 being used to clamp a battery 40, the suction nozzle 20 being disposed corresponding to a liquid injection hole 41 of the battery 40 to collect formation exhaust gas from the battery 40, and the negative pressure source 30 being connected to the suction nozzle 20 to provide negative pressure environment for the suction nozzle 20, wherein there is a preset distance between the suction nozzle 20 and the liquid injection hole 41 of the battery 40 to prevent electrolyte in the battery 40 from being drawn out.

The battery 40 may be a secondary battery or a primary battery, or may be a lithium-sulfur battery, a sodium-ion battery, or a magnesium-ion battery, but is not limited to thereto. The battery 40 may be in a form of a cylinder, a flat body, a cuboid, etc.

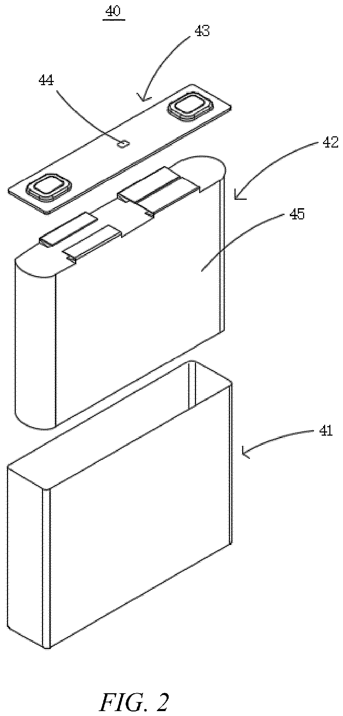

Referring to FIG. 2, FIG. 2 is a schematic structural exploded view of a battery according to some embodiments of the present application. As shown in FIG. 2, the battery 40 comprises a housing 41, an electrode assembly 42, an end cap 43, and other functional components.

The housing 41 is an assembly that is configured to fit with the end cap 43 to form internal environment of the battery 40, wherein the internal environment created may be used for accommodating the electrode assembly 42, electrolyte and other components. The housing 41 and the end cap 43 may be separate components, and the housing 41 may be provided with an opening, at which the end cap 43 covers the opening to form the internal environment of the battery 40. Without limitation, the end cap 43 may also be integrated with the housing 41. Specifically, the end cap 43 and the housing 41 can form a common connection surface before other components are placed into the housing, and then the end cap 43 covers the housing 41 when the interior of the housing 41 needs to be packaged. The housing 41 may have various shapes and various sizes, for example, in the form of a cuboid, a cylinder, a hexagonal prism, etc. Specifically, the housing 41 may be shaped depending on the specific shape and size of the electrode assembly 42. The housing 41 may be made of various materials, such as copper, iron, aluminum, stainless steel and an aluminum alloy, which is not specifically limited in the embodiments of the present application.

The electrode assembly 42 is a component in the battery 40 where an electrochemical reaction occurs. One or more electrode assemblies 42 may be contained in the housing 41. The electrode assembly 42 is mainly formed by winding or stacking a positive electrode plate and a negative electrode plate, and a separator is usually provided between the positive electrode plate and the negative electrode plate. The portions of the positive electrode plate and the negative electrode plate that have an active material constitute a main body portion of the electrode assembly, and the portions of the positive electrode plate and the negative electrode plate that have no active material each constitute a tab. A positive electrode tab and a negative electrode tab can be both located at one end of the main body portion or respectively at two ends of the main body portion. During the charging and discharging of the battery, a positive active material and a negative active material react with the electrolyte solution, and the tabs are connected to the electrode terminals to form a current loop.

The end cap 43 refers to a component that covers an opening of the housing 41 to isolate internal environment of the battery 40 from external environment. Without limitation, the end cap 43 may have a shape adapted to that of the housing 41 to fit with the housing 41. Optionally, the end cap 43 may be made of a material with certain hardness and strength (such as aluminum alloy), and thus the end cap 43 is less prone to deformation when being squeezed or collided, such that the battery 40 can have a higher structural strength, and safety performance can also be improved. Functional components, such as electrode terminals, may be provided on the end cap 43. The electrode terminals may be used for electrical connection to the electrode assembly 42 for outputting or inputting electrical energy of the battery 40. In some embodiments, a pressure relief mechanism, which is used to release an internal pressure when the internal pressure or temperature of the battery 40 reaches a threshold, may be further provided on the end cap 43. The end cap 43 may be made of various materials, such as copper, iron, aluminum, stainless steel, an aluminum alloy and plastic, which is not specifically limited in the embodiments of the present application. In some embodiments, an insulating member may be further provided on an inner side of the end cap 43. The insulating member may be used to isolate electrical connection components within the housing 41 from the end cap 43 so as to reduce the risk of short circuiting. Exemplarily, the insulating member may be made of plastic, rubber, etc.

The liquid injection hole 44 is a through hole that is provided in the battery 40 and is connected to the inside of the battery 40, and the electrolyte can be injected into the battery 40 via the liquid injection hole 44. The liquid injection hole 44 may be circular, elliptical or polygonal in shape, and the liquid injection hole 44 may be located in the end cap 43, a side surface of the housing 41, or a bottom surface of the housing 41. A plurality of liquid injection holes 44 may be provided, so as to improve the liquid injection efficiency of the battery 40. In this case, each liquid injection hole 44 is correspondingly provided with a suction nozzle 20.

The clamp 10 is a component in the formation system that is used to clamp the battery 40 and apply a pressure to the battery 40, and applying a pressure to the battery 40 by means of the clamp 10 can promote the discharge of the formation gas from the battery 40. The clamp 10 can clamp the battery 40 by means of a multi-layer plate structure, and the clamp 10 can be arranged in a box, in a cabinet, or on a base.

The suction nozzle 20 is a component in the formation system that is used to collect the formation exhaust gas from the battery 40, and the suction nozzle 20 is disposed facing the liquid injection hole 41 of the battery 40, and can draw the formation exhaust gas from the battery 40 in the negative pressure environment. The suction nozzle 20 may be either directly or indirectly connected to the negative pressure source 30. The suction nozzle 20 may be configured in the form of a cylinder, a prism or a circular truncated cone. The suction nozzle 20 may be made of a corrosion-resistant material, such as ethylene-propylene-diene monomer.

The negative pressure source 30 is a component in the formation system that is used to create negative pressure environment for the suction nozzle 20, and the negative pressure source 30 may be a common vacuum pumping device, such as a vacuum pump.

With regard to the formation system according to the embodiments of the present application, a pressure is applied to the battery 40 by means of the clamp 10, which can suppress the expansion of a gap between electrode plates of the battery 40 and suppress the generation of bubbles, and can also promote the discharge of the formation gas from the battery 40. In this way, it is possible to ensure that there is no abnormality in the inner interphase of the battery 40 in a normal pressure state, so as to achieve the effect of formation under a normal pressure. In addition, the formation exhaust gas in the battery 40 discharged from the liquid injection hole is removed in the negative pressure environment that is created in the suction nozzle 20 by the negative pressure source 30. Since there is a preset distance between the suction nozzle 20 and the liquid injection hole 41 of the battery 40, the negative pressure environment does not directly enter the inside of the battery 40, which can prevent the electrolyte inside the battery 40 from being drawn out so as to prevent the loss of the electrolyte inside the battery 40.

In some embodiments, the preset distance d between the suction nozzle 20 and the liquid injection hole 41 of the battery 40 may be between 0 and 10 millimeters, so as to prevent environmental pollution caused by the formation exhaust gas of the battery 40 being not drawn into the suction nozzle 20 and then escaping into the external environment due to the too large distance between the suction nozzle 20 and the liquid injection hole 41 of the battery 40. In addition, it is possible to prevent the electrolyte inside the battery 40 from being drawn out caused by the suction nozzle 20 pressing in the liquid injection hole 41 of the battery 40.

The clamp 10 comprises at least two limiting members 11 disposed opposite each other at an interval, the battery 40 is held between the two adjacent limiting members 11, and the two adjacent limiting members 11 can move relatively to change the clamping force on the battery 40.

The limiting member 11 may be plate-like, the limiting member 11 is a component in the clamp 10 that is configured to be clamped on the battery 40, and the number of the limiting members 11 can be determined according to the number of the batteries 40 to be clamped. In addition, the two adjacent limiting members 11 can move relatively, that is, in the two adjacent limiting members 11, one limiting member 11 can move close to/away from the other limiting member 11, or the two limiting members 11 move simultaneously to change the distance between the two limiting members 11.

The magnitude of the clamping force on the battery 40 can be adjusted by means of the relative movement of the limiting members 11. Moreover, the distance between the limiting members 11 can be changed by the relative movement of the limiting members 11 so as to adapt to the clamping of the batteries 40 of different sizes, thereby improving the compatibility of the clamp 10.

In some embodiments of the present application, optionally, the clamp 10 further comprises a base 12, and each limiting member 11 is movably disposed on the base 12.

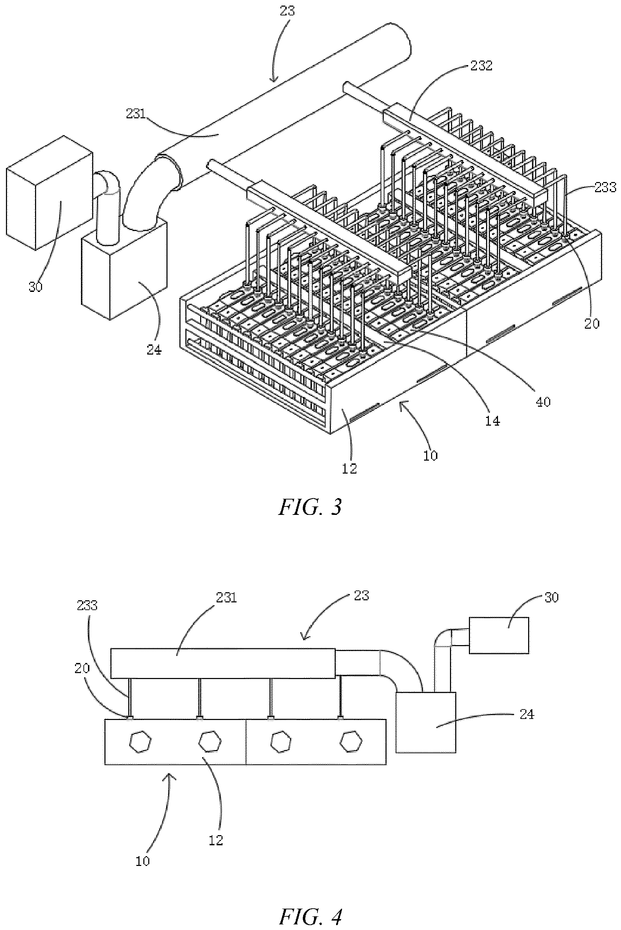

The base 12 is a component in the clamp 10 that has a supporting function, and the base 12 may be provided as a plate. In the formation system as shown in FIGS. 3 and 4, the clamp 10 can simultaneously clamp multiple batteries 40, and optionally, the limiting members 11 may be of a plate-like structure, a plurality of limiting members 11 are sequentially disposed on one base 12 in a preset direction, one battery 40 can be held between two adjacent limiting members 11, and each limiting member 11 is movably disposed on the base 12. The base 12 is further provided with two stop members located on the outermost side of the plurality of limiting members 11, and the two stop members can limit the movement of the plurality of limiting members within a certain range. One of the stop members may be provided with a driving structure that can force the plurality of limiting members 11 to move on the base 12 to apply a pressure to the batteries 40. The driving structure may be a driving electric motor, or a manual pressure rod to apply a pressure. The movement of each limiting member 11 on the base 12 can be achieved by providing a guide rod between the two stop members, a plurality of guide rods may be provided between the two stop members, and the plurality of limiting members 11 may slide along the plurality of guide rods, so as to achieve the movement of the plurality of limiting members 11 on the base 12.

The base 12 can have a function of bearing the battery 40. When the battery 40 is placed between the two adjacent limiting members 11, the bottom of the battery 40 can be supported on the base 12, so as to conveniently place the battery 40 between the two adjacent limiting members 11 and locate a clamping position of the battery 40.

The clamp 10 further comprises a buffer member 13. The buffer member 13 is disposed on the side of the limiting member 11 close to the battery 40 and configured to abut against the battery 40.

The buffer member 13 is a component in the clamp 10 that is configured to abut against the battery 40, and the buffer member 13 can buffer the clamping force of the clamp 10 on the battery 40, such that the damage to the battery 40 caused by a sudden change in the clamping force can be avoided by means of the buffer member 13. Optionally, the buffer member 13 may be a pad, such as a silicone pad or a rubber pad, having a buffering function, which is not limited in the embodiments of the present application.

In some embodiments of the present application, optionally, the buffer member 13 has a first surface 131, the first surface 131 abutting against a second surface 45 of the battery 40, and the orthographic projection of the first surface 131 on the second surface 45 not exceeding the second surface 45.

The buffer member 13 has two opposite surfaces. One of the two surfaces of the buffer member 13 is attached to the limiting member 11, that is, the buffer member 13 is fixed to the limiting member 11, and the other surface of the buffer member 13, that is, the first surface 131, abuts against the battery 40. In the battery clamping structure as shown in FIG. 1, the battery 40 is clamped between the two limiting members 11, the buffer member 13 on each limiting member 11 transfers the pressure to the battery 40, the edge of the buffer member 13 is located within the edge of the housing of the battery 40, and the buffer member 13 deforms during the pressure transfer process. The amounts of deformation of the parts of the buffer member 13 are different depending on the degree of hardness of the housing of the battery 40, and after avoiding the relatively hard part of the housing of the battery 40, the buffer member 13 can better transfer the pressure into the battery 40 to tightly press the electrode assembly 42 in the housing of the battery 40. In addition, the edge part of the battery 40 is not easy to deform by being squeezed and then crushed.

The first surface 131 of the buffer member 13 is of an arched structure with the middle protruding outwardly. In the formation process, during the process of the clamp 10 clamping the battery 40, the middle of the second surface 45 of the battery 40 has relatively large degree of deformation, such that the configuration of the first surface 131 of the buffer member 13 as an arched structure with the middle protruding outward can increase the clamping force on the battery 40, reduce the gap between the electrode assemblies 42, and reduce the generation of gas during the formation process of the battery 40, thereby improving the formation quality.

In this way, the first surface 131 of the buffer member 13 can avoid the edge of the housing of the battery 40 to avoid the relatively hard part of the battery 40, so as to better adapt to the pressure applied to the battery 40 to improve the squeezing effect on the battery 40 to tightly press the electrode assembly 42 inside the battery 40.

In some embodiments of the present application, optionally, the suction nozzle 20 is internally provided with a funnel-shaped channel 21, with the end of the channel 21 having a larger area being disposed facing the liquid injection hole 41 of the battery 40, and the other end being connected to the negative pressure source 30.

The formation exhaust gas from the battery 40 can be better collected by means of the funnel-shaped channel 21 inside the suction nozzle 20. The funnel-shaped channel 21 can increase the opening area of one of the ends of the suction nozzle 20, and the formation exhaust gas from the battery 40 can be collected in a wider range by means of increasing the opening area of the suction nozzle 20 facing the liquid injection hole 41 of the battery 40.

In some embodiments of the present application, optionally, the formation system further comprises an enclosure 22, with one end of the enclosure 22 being sleeved on the suction nozzle 20, and the other end of the enclosure 22 being disposed facing and close to the liquid injection hole 41 of the battery 40.

The enclosure 22 is disposed on the suction nozzle 20 for preventing the formation exhaust gas of the battery 40 from diffusing to the surroundings. Optionally, the enclosure 22 may be of a hollow structure, and the enclosure 22 may be funnel-shaped, with the end of the enclosure 22 having a larger opening area facing the liquid injection hole 44 of the battery 40. The enclosure 22 may be closer to the liquid injection hole 44 of the battery 40 than the suction nozzle 22, so as to prevent diffusion of the formation exhaust gas from the battery 40.

The enclosure 22 may have a barrier function around the liquid injection hole 41 of the battery 40 to prevent the formation exhaust gas from the battery 40 from diffusing to the surroundings so as to avoid the pollution to the surroundings caused by the formation exhaust gas from the battery 40.

In some embodiments of the present application, optionally, the formation system further comprises a collection pipeline 23. The collection pipeline 23 is configured for connecting the negative pressure source 30 and the suction nozzle 20.

The collection pipeline 23 can facilitate the connection between the negative pressure source 30 and the suction nozzle 20. The length of the collection pipeline 23 can be set according to the distance between the negative pressure source 30 and the suction nozzle 20, and during production in a factory, the negative pressure source 30 and the suction nozzle 20 that are far away from each other can be connected by means of the collection pipeline 23.

In some embodiments of the present application, optionally, the collection pipeline 23 comprises a delivery pipe 231, a confluence pipe 232 connected to the delivery pipe 231, and a plurality of branch pipes 233 connected to the confluence pipe 232, the negative pressure source 30 being connected to the delivery pipe 231, and each branch pipe 233 being connected to one suction nozzle 20.

In this way, the simultaneous collection of the formation exhaust gas from multiple batteries 40 can be achieved by means of the confluence pipe 232 and the plurality of branch pipes 233, thereby improving the production efficiency.

Accordingly, a plurality of clamps 10 may be provided. The plurality of clamps 10 are disposed side by side, and each clamp 10 can simultaneously apply a pressure to multiple batteries 40. The liquid injection hole 41 of each battery 40 corresponds to one suction nozzle 20, and the formation exhaust gas collected by each suction nozzle 20 converges via the confluence pipe 232 and then reaches the delivery pipe 231, and is then transferred and discharged via the delivery pipe 231. In addition, each clamp 10 can simultaneously apply a pressure to two rows of batteries 40, that is, an intermediate plate 14 is provided on the base 12 of the clamp 10, and a group of batteries 40 can be placed on either side of the intermediate plate 14. Accordingly, each confluence pipe 232 corresponding to each clamp 10 can simultaneously collect the formation exhaust gas from two groups of batteries 40, that is, the plurality of branch pipes 233 connected to each confluence pipe 232 can be disposed oppositely on two sides of the confluence pipe 232, such that the number of the batteries 40 clamped by each clamp 10 can be increased, thereby improving the formation efficiency of the formation system.

In a specific formation system as shown in FIGS. 3 and 4, two clamps 10 are disposed side by side, each clamp 10 corresponds to one confluence pipe 232, each confluence pipe 232 is connected to twenty-four branch pipes 233, the twenty-four branch pipes 233 are divided into two groups, and the two groups of branch pipes 233 are disposed oppositely on two sides of the confluence pipe 232. Each clamp 10 can simultaneously apply a pressure to twenty-four batteries 40, and the formation exhaust gas from each battery 40 can be collected via the corresponding suction nozzle 20, sequentially pass through the branch pipe 233 and the confluence pipe 232 and then reach the delivery pipe 231, and then be transferred and discharged via the delivery pipe 231.

The plurality of clamps 10 are provided, such that the number of batteries 40 simultaneously subjected to formation by the formation system can be increased, thereby improving the production efficiency.

In some embodiments of the present application, optionally, the formation system further comprises a gas-liquid separator 24, with an inlet end of the gas-liquid separator 24 being connected to the delivery pipe 231, and an outlet end of the gas-liquid separator 24 being connected to the negative pressure source 30.

The gas-liquid separator 24 can filter the formation exhaust gas from the battery 40 to remove the electrolyte in the formation exhaust gas, so as to prevent environmental pollution caused by the electrolyte. In addition, the inlet end of the gas-liquid separator 24 is connected to the delivery pipe 231, and the outlet end of the gas-liquid separator 24 is connected to the negative pressure source 30, such that it is not necessary to provide gas-liquid separators 24 in the branches of the collection pipeline 23, and thus the number of gas-liquid separators 24 in the formation system can be reduced.

Finally, it should be noted that the above embodiments are merely used for illustrating rather than limiting the technical solution of the present application. Although the present application has been illustrated in detail with reference to the foregoing embodiments, it should be understood by those of ordinary skill in the art that the technical solutions recorded in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A formation system for formation of a battery (40), wherein the formation system comprises:
the battery (40);
a clamp (10) for clamping the battery (40);
a suction nozzle (20) disposed corresponding to and opposite to a liquid injection hole (44) of the battery (40) to collect a formation exhaust gas of the battery (40); and
a negative pressure source (30) connected to the suction nozzle (20) to provide negative pressure environment for the suction nozzle (20);
wherein there is a preset distance between the suction nozzle (20) and the liquid injection hole (44) to prevent electrolyte in the battery (40) from being drawn out;
the clamp (10) comprises at least two limiting members (11) disposed opposite each other at an interval, the battery (40) is held between the two adjacent limiting members (11), and the two adjacent limiting member (11) are movable relatively to change a clamping force on the battery (40);
the clamp (10) further comprises a buffer member (13) that is disposed on the side of the limiting member (11) close to the battery (40) and configured to abut against the battery (40); and
a first surface (131) of the buffer member (13) is of an arched structure with the middle protruding outwardly, and the first surface (131) abuts against the battery (40).

2. The formation system according to claim 1, wherein
the clamp (10) further comprises a base (12), on which each of the limiting members (11) is movably disposed.

3. The formation system according to claim 1 or 2, wherein
the buffer member (13) has the first surface (131) configured to abut against a second surface (45) of the battery (40), with the orthographic projection of the first surface (131) on the second surface (45) not exceeding the second surface (45).

4. The formation system according to any one of claims 1 to 3, wherein
the suction nozzle (20) is internally provided with a funnel-shaped channel (21), with the end of the channel (21) having a larger area being disposed facing the liquid injection hole (44) of the battery (40), and the other end being connected to the negative pressure source (30).

5. The formation system according to any one of claims 1 to 4, wherein
the formation system further comprises an enclosure (22), with one end of the enclosure (22) being sleeved on the suction nozzle (20), and the other end of the enclosure (22) being disposed facing and close to the liquid injection hole (44) of the battery (40).

6. The formation system according to any one of claims 1 to 5, wherein
the formation system further comprises a collection pipeline (23) configured for connecting the negative pressure source (30) and the suction nozzle (20).

7. The formation system according to claim 6, wherein
the collection pipeline (23) comprises a delivery pipe (231), a confluence pipe (232) connected to the delivery pipe (231), and a plurality of branch pipes (233) connected to the confluence pipe (232), the negative pressure source (30) being connected to the delivery pipe (231), and each of the branch pipes (233) being connected to one suction nozzle (20).

8. The formation system according to claim 7, wherein
the formation system further comprises a gas-liquid separator (24), with an inlet end of the gas-liquid separator (24) being connected to the delivery pipe (231), and an outlet end of the gas-liquid separator (24) being connected to the negative pressure source (30).

9. A formation method for a battery (40), wherein the formation method comprises:
clamping the battery (40);
arranging a suction nozzle (20) at a preset distance from a liquid injection hole (44) of the battery (40); and
driving a negative pressure source (30) to enable the suction nozzle (20) to generate a negative pressure;
wherein the clamp (10) comprises at least two limiting members (11) disposed opposite each other at an interval, the battery (40) is held between the two adjacent limiting members (11), and the two adjacent limiting member (11) are movable relatively to change a clamping force on the battery (40);
the clamp (10) further comprises a buffer member (13) that is disposed on the side of the limiting member (11) close to the battery (40) and configured to abut against the battery (40); and
a first surface (131) of the buffer member (13) is of an arched structure with the middle protruding outwardly, and the first surface (131) abuts against the battery (40).

10. The formation method according to claim 9, wherein
the preset distance has a range greater than 0 mm and less than 10 mm.

## Patentansprüche

1. Formationssystem zur Bildung einer Batterie (40), wobei das Formationssystem Folgendes umfasst:
die Batterie (40);
eine Klemme (10) zum Einklemmen der Batterie (40);
eine Saugdüse (20), angeordnet entsprechend dem und gegenüber einem Flüssigkeitseinspritzloch (44) der Batterie (40) zum Sammeln eines Bildungsabgases der Batterie (40); und
eine negative Druckquelle (30), verbunden mit der Saugdüse (20) zum Bereitstellen einer negativen Druckumgebung für die Saugdüse (20) ;
wobei es einen voreingestellten Abstand zwischen der Saugdüse (20) und dem Flüssigkeitseinspritzloch (44) gibt, um zu verhindern, dass Elektrolyt in der Batterie (40) herausgezogen wird;
wobei die Klemme (10) mindestens zwei Begrenzungselemente (11) umfasst, die in einem Intervall einander gegenüberliegend angeordnet sind, wobei die Batterie (40) zwischen zwei angrenzenden Begrenzungselementen (11) gehalten wird, und wobei die zwei angrenzenden Begrenzungselemente (11) relativ bewegbar sind, um eine Klemmkraft an der Batterie (40) zu ändern;
wobei die Klemme (10) ferner ein Pufferelement (13) umfasst, das auf der Seite des Begrenzungselements (11) nahe der Batterie (40) angeordnet ist und dazu ausgelegt ist, an der Batterie (40) anzuliegen; und
wobei eine erste Oberfläche (131) des Pufferelements (13) von einer bogenförmigen Struktur ist, wobei die Mitte nach außen herausragt, und wobei die erste Oberfläche (131) an der Batterie (40) anliegt.

2. Formationssystem nach Anspruch 1, wobei
die Klemme (10) ferner eine Basis (12) umfasst, an der jedes der Begrenzungselemente (11) bewegbar angeordnet ist.

3. Formationssystem nach Anspruch 1 oder 2, wobei
beim Pufferelement (13) die erste Oberfläche (131) dazu ausgelegt ist, an einer zweiten Oberfläche (45) der Batterie (40) anzuliegen, wobei die orthogonale Projektion der ersten Oberfläche (131) auf der zweiten Oberfläche (45) nicht über die zweite Oberfläche (45) hinausreicht.

4. Formationssystem nach einem der Ansprüche 1 bis 3, wobei
die Saugdüse (20) intern mit einem trichterförmigen Kanal (21) bereitgestellt ist, wobei das Ende des Kanals (21) eine größere Fläche hat, die so angeordnet ist, dass sie zum Flüssigkeitseinspritzloch (44) der Batterie (40) zeigt, und wobei das andere Ende mit der negativen Druckquelle (30) verbunden ist.

5. Formationssystem nach einem der Ansprüche 1 bis 4, wobei
das Formationssystem ferner ein Gehäuse (22) umfasst, wobei ein Ende des Gehäuses (22) über die Saugdüse (20) gezogen ist und das andere Ende des Gehäuses (22) so angeordnet ist, dass es nahe dem Flüssigkeitseinspritzloch (44) der Batterie (40) ist und zu diesem zeigt.

6. Formationssystem nach einem der Ansprüche 1 bis 5, wobei
das Formationssystem ferner eine Sammelrohrleitung (23) umfasst, die ausgelegt ist zum Verbinden der negativen Druckquelle (30) und der Saugdüse (20).

7. Formationssystem nach Anspruch 6, wobei
die Sammelrohrleitung (23) eine Zufuhrleitung (231), eine Zusammenflussleitung (232), die mit der Zufuhrleitung (231) verbunden ist, und mehrere Verzweigungsleitungen (233), die mit der Zusammenflussleitung (232) verbunden sind, umfasst, wobei die negative Druckquelle (30) mit der Zufuhrleitung (231) verbunden ist und jede der Verzweigungsleitungen (233) mit einer Saugdüse (20) verbunden ist.

8. Formationssystem nach Anspruch 7, wobei
das Formationssystem ferner einen Gas-Flüssigkeits-Separator (24) umfasst, wobei ein Einlassende des Gas-Flüssigkeits-Separators (24) mit der Zufuhrleitung (231) verbunden ist und ein Auslassende des Gas-Flüssigkeits-Separators (24) mit der negativen Druckquelle (30) verbunden ist.

9. Formationsverfahren für eine Batterie (40), wobei das Formationsverfahren Folgendes umfasst:
Einklemmen der Batterie (40);
Anordnen einer Saugdüse (20) bei einem voreingestellten Abstand von einem Flüssigkeitseinspritzloch (44) der Batterie (40); und
Antreiben einer negativen Druckquelle (30), um einer Saugdüse (20) zu ermöglichen, einen negativen Druck zu erzeugen;
wobei die Klemme (10) mindestens zwei Begrenzungselemente (11) umfasst, die in einem Intervall einander gegenüberliegend angeordnet sind, wobei die Batterie (40) zwischen zwei angrenzenden Begrenzungselementen (11) gehalten wird, und wobei die zwei angrenzenden Begrenzungselemente (11) relativ bewegbar sind, um eine Klemmkraft an der Batterie (40) zu ändern;
wobei die Klemme (10) ferner ein Pufferelement (13) umfasst, das auf der Seite des Begrenzungselements (11) nahe der Batterie (40) angeordnet ist und dazu ausgelegt ist, an der Batterie (40) anzuliegen; und
wobei eine erste Oberfläche (131) des Pufferelements (13) von einer bogenförmigen Struktur ist, wobei die Mitte nach außen herausragt, und wobei die erste Oberfläche (131) an der Batterie (40) anliegt.

10. Formationsverfahren nach Anspruch 9, wobei
der voreingestellte Abstand einen Bereich von größer als 0 mm und kleiner als 10 mm aufweist.

## Revendications

1. Système de formation pour la formation d'une batterie (40), dans lequel le système de formation comprend :
la batterie (40) ;
un outil de serrage (10) pour serrer la batterie (40) ;
une buse d'aspiration (20) disposée de façons correspondant et opposée à un trou d'injection de liquide (44) de la batterie (40) pour collecter un gaz d'évacuation de formation de la batterie (40) ; et
une source de pression négative (30) raccordée à la buse d'aspiration (20) pour fournir un environnement de pression négative pour la buse d'aspiration (20) ;
dans lequel il y a une distance prédéfinie entre la buse d'aspiration (20) et le trou d'injection de liquide (44) pour empêcher un électrolyte dans la batterie (40) d'être extrait ;
l'outil de serrage (10) comprend au moins deux éléments limiteurs (11) disposés de façon opposée l'un à l'autre à un intervalle, la batterie (40) est retenue entre les deux éléments limiteurs adjacents (11), et les deux éléments limiteurs adjacents (11) sont mobiles relativement pour changer une force de serrage sur la batterie (40) ;
l'outil de serrage (10) comprend en outre un élément amortisseur (13) qui est disposé sur le côté de l'élément limiteur (11) près de la batterie (40) et configuré pour prendre appui contre la batterie (40) ; et
une première surface (131) de l'élément amortisseur (13) est d'une structure arquée avec le milieu faisant saillie vers l'extérieur, et la première surface (131) prend appui contre la batterie (40).

2. Système de formation selon la revendication 1, dans lequel l'outil de serrage (10) comprend en outre une base (12), sur laquelle chacun des éléments limiteurs (11) est disposé de façon mobile.

3. Système de formation selon la revendication 1 ou 2, dans lequel
l'élément amortisseur (13) a la première surface (131) configurée pour prendre appui contre une seconde surface (45) de la batterie (40), la projection orthographique de la première surface (131) sur la seconde surface (45) ne dépassant pas la seconde surface (45).

4. Système de formation selon l'une quelconque des revendications 1 à 3, dans lequel
la buse d'aspiration (20) est pourvue de façon interne d'un canal en forme d'entonnoir (21), l'extrémité du canal (21) ayant une plus grande superficie étant disposée en face du trou d'injection de liquide (44) de la batterie (40), et l'autre extrémité étant raccordée à la source de pression négative (30).

5. Système de formation selon l'une quelconque des revendications 1 à 4, dans lequel
le système de formation comprend en outre une enceinte (22), avec une extrémité de l'enceinte (22) emmanchée sur la buse d'aspiration (20), et l'autre extrémité de l'enceinte (22) disposée en face et près du trou d'injection de liquide (44) de la batterie (40).

6. Système de formation selon l'une quelconque des revendications 1 à 5, dans lequel
le système de formation comprend en outre une conduite de collecte (23) configurée pour raccorder la source de pression négative (30) et la buse d'aspiration (20).

7. Système de formation selon la revendication 6, dans lequel la conduite de collecte (23) comprend un tuyau de distribution (231), un tuyau de confluence (232) raccordé au tuyau de distribution (231), et une pluralité de tuyaux de ramification (233) raccordés au tuyau de confluence (232), la source de pression négative (30) étant raccordée au tuyau de distribution (231), et chacun des tuyaux de ramification (233) étant raccordé à une buse d'aspiration (20).

8. Système de formation selon la revendication 7, dans lequel le système de formation comprend en outre un séparateur gaz-liquide (24), avec une extrémité d'entrée du séparateur gaz-liquide (24) raccordée au tuyau de distribution (231), et une extrémité de sortie du séparateur gaz-liquide (24) raccordée à la source de pression négative (30).

9. Procédé de formation pour une batterie (40), dans lequel le procédé de formation comprend :
le serrage de la batterie (40) ;
l'agencement d'une buse d'aspiration (20) à une distance prédéfinie d'un trou d'injection de liquide (44) de la batterie (40) ; et
l'entraînement d'une source de pression négative (30) pour permettre à la buse d'aspiration (20) de générer une pression négative ;
dans lequel l'outil de serrage (10) comprend au moins deux éléments limiteurs (11) disposés de façon opposée l'un à l'autre à un intervalle, la batterie (40) est retenue entre les deux éléments limiteurs adjacents (11), et les deux éléments limiteurs adjacents (11) sont mobiles relativement pour changer une force de serrage sur la batterie (40) ;
l'outil de serrage (10) comprend en outre un élément amortisseur (13) qui est disposé sur le côté de l'élément limiteur (11) près de la batterie (40) et configuré pour prendre appui contre la batterie (40) ; et
une première surface (131) de l'élément amortisseur (13) est d'une structure arquée avec le milieu faisant saillie vers l'extérieur, et la première surface (131) prend appui contre la batterie (40).

10. Procédé de formation selon la revendication 9, dans lequel la distance prédéfinie a une plage supérieure à 0 mm et inférieure à 10 mm.
